# EUROPÄISCHE PATENTANMELDUNG

(11) **EP 2 209 104 A1**
(43) Veröffentlichungstag der Anmeldung: **21.07.2010**
(21) Anmeldenummer: 09015588.8
(22) Anmeldetag: 17.12.2009
(51) Int. Cl.: G09F 11/30, G09F 15/00, G03B 21/58

(54) **Aufsteller für blattförmige Informationsträger**

(30) Priorität: 14.01.2009 DE 102009004983
(71) Anmelder: Durable Hunke & Jochheim GmbH & Co. KG., 58636 Iserlohn (DE)
(72) Erfinder: Maier-Hunke, Horst-Werner, 58640 Iserlohn (DE)
(74) Vertreter: Grünecker, Kinkeldey, Stockmair & Schwanhäusser Anwaltssozietät

(57) **Zusammenfassung**

Die Erfindung betrifft einen Aufsteller für Informationsmaterial mit einer in einem Sockelgehäuse (2) drehbar gelagerten Wickelwelle, einer an der Wickelwelle auf- und abrollbar angeordneten Präsentationsbahn, wobei die zumindest teilweise von der Wickelwelle abgerollte und aufgespannte Präsentationsbahn eine vom Sockelgehäuse (2) abstehende Präsentationsebene ausbildet. Um derartige Aufsteller flexibler einsetzen zu können, ist erfindungsgemäß vorgesehen, dass die Präsentationsebene wenigstens eine zumindest einseitig transparente Hülle zur Aufnahme und Präsentation blattförmiger Informationsträger aufweist.

## Beschreibung

Die vorliegende Erfindung betrifft einen Aufsteller für blattförmige Informationsträger mit einer in einem Sockelgehäuse drehbar gelagerten Wickelwelle, einer an der Wickelwelle auf- und abrollbar angeordneten Präsentationsbahn, wobei die zumindest teilweise von der Wickelwelle abgerollte und aufgespannte Präsentationsbahn eine vom Sockelgehäuse abstehende Präsentationsebene ausbildet.

Aus dem Stand der Technik, beispielsweise der DE 10 2005 037306 A1, sind Aufsteller bekannt, die einen Halter mit mindestens einer Nut zur Aufnahme des Randes mindestens eines biegesteifen Informationsträgers und/oder mindestens einer biegesteifen Hülle für Informationsträger umfassen. Schwierig gestaltet sich bei derartigen, meist als Tischaufstellern eingesetzten Vorrichtungen, die Präsentation großformatiger Informationsmaterialien, bei denen die Aufsteller zum Umkippen und Informationsmaterialien zum Umknicken neigen.

Zum Aufstellen großflächiger Informationsträger ist, beispielsweise aus der DE 203 17 473 U1 oder der DE 20 2004 001 816 U1, bekannt, eine Leinwand oder ein bedrucktes Banner auf einer drehbar in einem Gehäuse angeordneten Wickelwelle aufzurollen. Zur Präsentation wird die Leinwand bzw. das bedruckte Banner von der Welle abgewickelt und im aufgespannten Zustand an einem Halter fixiert.

Nachteilig bei den gattungsgemäßen Aufstellern mit aufgewickelter Leinwand ist deren Unflexibilität, da für einen Wechsel des Informationsträgers die komplette Leinwand bzw. die Wickelwelle nebst Leinwand ausgetauscht werden muss.

Der vorliegenden Erfindung liegt folglich die Aufgabe zugrunde, einen Aufsteller der oben genannten Art zu schaffen, der flexibler einsetzbar ist.

Diese Aufgabe wird durch die vorliegende Erfindung auf überraschend einfache Weise dadurch gelöst, dass die Präsentationsebene wenigstens eine zumindest einseitig transparente Hülle zur Aufnahme und Präsentation blattförmiger Informationsträger aufweist.

Die Hülle in der Präsentationsebene ermöglicht einen einfachen Austausch des in die Hülle einsteckbaren Informationsträgers, ohne dass die gesamte Präsentationsbahn oder gar die Präsentationsbahn mit Wickelwelle gewechselt werden muss.

Die vorliegende Erfindung kann durch verschiedene, jeweils für sich vorteilhafte Ausgestaltungen weiterentwickelt sein, die beliebig miteinander kombinierbar sind. Auf die einzelnen vorteilhaften Ausgestaltungen und die damit verbundenen Vorteile wird im Folgenden kurz eingegangen.

Um das Abrollen der Präsentationsbahn und das Aufspannen der Präsentationsebene zu erleichtern und die Präsentationsebene zu stabilisieren, kann das ausziehbare Ende der Präsentationsbahn eine im Wesentlichen parallel zur Wickelwelle angeordnete Auszugsstrebe aufweisen.

Eine Präsentation der Vorder- und Rückseite des Informationsträgers kann, gemäß einer weiteren vorteilhaften Ausführungsform, erreicht werden, indem die Präsentationsebene eine beidseitig transparente Hülle aufweist.

Um möglichst großformatige Informationsträger auszustellen, kann, gemäß einer weiteren Ausführungsform, die Präsentationsebene im Wesentlichen aus der Hülle bestehen. Besonders vorteilhaft ist eine Ausführungsform, bei der die Präsentationsbahn im Wesentlichen aus der Hülle besteht, weil dabei stets die gesamte Präsentationsebene die Hülle ausbildet, und zwar unabhängig davon, wie weit die Präsentationsbahn von der Wickelwelle abgerollt und zur Präsentationsebene aufgespannt ist.

Gemäß einer weiteren, besonders einfach zu fertigenden Ausführungsform kann die Hülle von wenigstens zwei aufeinander liegenden Folienschichten gebildet sein. Hierbei sind die aufeinander liegenden Folienschichten in der Präsentationsebene im Wesentlichen parallel zueinander aufgespannt. Die eine Folienschicht stellt die Vorderseite und die andere Folienschicht die Rückseite der von den beiden Folienschichten ausgebildeten Hülle dar, in die der Informationsträger von einem der Ränder aus zwischen die beiden Folienschichten eingeführt wird.

Die zwei aufeinander liegenden Folienschichten können außerhalb der Präsentationsebene miteinander verbunden sein, um die Lage der beiden Folienschichten zueinander zu fixieren und ein Verrutschen der einen Folienschicht von der anderen Folienschicht zu verhindern. Die Verbindungsstellen außerhalb der Präsentationsebene zu fertigen bzw. anzuordnen hat den Vorteil, dass die Verbindungsstellen beim Aufsteller nicht auffallen, da sie außerhalb der sichtbaren, vom Sockelgehäuse abstehenden Präsentationsebene liegen.

In einer weiteren vorteilhaften Ausführungsform können die Folienschichten von einer umgelenkten Folienbahn gebildet sein. Diese Folienbahn ist vorzugsweise doppellagig auf der Wickelwelle aufgerollt. In einer besonders vorteilhaften Ausführungsform kann eine Folienbahn symmetrisch zur Mittelquerachse auf sich zurückgefaltet sein, wobei die beiden Bahnenden, eine Schlaufe bildend, an der Wickelwelle befestigt sind und die Faltstelle bzw. Umlenkstelle der Schlaufe um die Auszugsstrebe herumgeführt ist. Hierbei bildet die gesamte Präsentationsebene die Hülle, so dass diese Ausführungsform besonders flexibel ist, da die Größe der aufgespannten Präsentationsfläche an die Größe des aufzustellenden Informationsmaterials einfach angepasst werden kann. Außerdem ist bei dieser Anordnung die Präsentationsbahn mit ihrem ausziehbaren Ende frei aus der Auszugsstrebe gelagert, d.h. die Folien- bzw. Präsentationsbahn ist nicht starr und fest mit der Strebe verbunden, sondern so angeordnet, dass die Folienbahn zumindest in Längsrichtung verschiebbar die Strebe umläuft. Die freie Lagerung verhindert eine Faltenbildung beim Aufrollen der Präsentationsbahn, die bei einer starren Befestigung der Folie an der Auszugsstrebe dadurch entsteht, dass die einzelnen Lagen einer doppellagig aufgerollten Folienbahn bzw. zweier aufeinander liegend angeordneten Folienschichten unterschiedliche Ab- bzw. Aufrolllängen aufweisen. Während die freie Lagerung diese Längenunterschiede kompensiert, schlägt die Folienschicht mit der kürzeren Aufrolllänge bei starrer Lagerung Falten, es sei denn, die Auszugsstrebe selbst wäre um ihre Längsachse drehbar gelagert.

In einer weiteren vorteilhaften Ausführungsform entspricht die Größe und Form der Hülle im Wesentlichen der Größe und Form des aufzunehmenden Informationsträgers, beispielsweise der eines genormten DIN-Blattformats. Hierzu kann beispielsweise eine im Wesentlichen aus der Hülle bestehenden Präsentationsbahn bzw. eine von wenigstens zwei aufeinanderliegenden Folienschichten gebildete Hülle eine Schweißnaht aufweisen, die im Wesentlichen senkrecht zur Auszugsrichtung der Präsentationsbahn verläuft und die Vorder- und Rückseite der Hülle bzw. die aufeinanderliegenden Folienschichten formschlüssig verbindet. Um mehrere Hüllen in der Präsentationsebene auszubilden, kann die Präsentationsbahn bzw. die aufeinanderliegenden Folienschichten mehrere, in Auszugsrichtung voneinander beabstandete Schweißnähte aufweisen. Dabei entspricht der Abstand in Auszugsrichtung zwischen zwei Schweißnähten bzw. zwischen Schweißnaht und ausziehbarem Ende der Präsentationsbahn im Wesentlichen der Breite und/oder Länge einer Standardgrößen für Papierformate der DIN-Norm DIN 476 bzw. DIN EN ISO 216.

Um die aus dem Sockelgehäuse abgerollte Präsentationsbahn aufzuspannen, kann gemäß einer weiteren Ausführungsform wenigstens eine Stütze vorgesehen sein, welche die Präsentationsebene aufspannt. Auf diese Weise kann der erfindungsgemäße Aufsteller freistehend eingesetzt werden. Vorzugsweise kann sich die Stütze vom Sockelgehäuse weg erstrecken und insbesondere kann die Stütze vorzugsweise im aufgespannten Zustand zwischen Sockelgehäuse und Auszugsstrebe angeordnet sein.

Vorzugsweise kann die wenigstens eine Stütze als am Sockelgehäuse wiederholt anbringbares Element ausgebildet sein, wodurch der Aufsteller eine besonders kompakte Bauweise erlangt. Für den Transport lässt sich der Aufsteller durch Abnehmen der Stütze vom Sockelgehäuse zerlegen und kann am Aufstellort wieder zusammengesetzt werden. Für die Montage des Stützpfostens am Sockelgehäuse bietet sich eine wiederholt lösbare Verbindung, vorzugsweise eine form- und/oder kraftschlüssige Verbindung an, beispielsweise eine Schraubverbindung oder eine Nut-Zapfen-Steckverbindung.

Vorteilhafterweise kann sich die Stütze im montierten Zustand im Wesentlichen entlang der Auszugsrichtung der Präsentationsbahn erstrecken, wodurch auf konstruktiv einfache und zuverlässige Weise die auf die Auszugsstrebe wirkenden Spannkräfte der aufgespannten Präsentationsebene über die Stütze an das Sockelgehäuse abgeleitet werden.

Die Größe der Präsentationsebene kann auf einfache Weise an das Format des Informationsmaterials angepasst und entsprechend eingestellt werden, indem die Stütze eine veränderbare Länge aufweist. Dies kann beispielsweise über eine teleskopisch ausziehbare Stütze realisiert werden.

Eine besonders kompakte Bauweise der Stütze, die ebenfalls eine Variation ihrer Länge ermöglicht, sieht in einer weiteren vorteilhaften Ausführungsform vor, dass die Stütze in Längsrichtung miteinander verbindbare Segmente umfasst. Durch Auswahl der Anzahl und der Länge der Stützsegmente, die in Längsrichtung zur Stütze miteinander verbunden werden, kann die Gesamtlänge der Stütze auf das gewünschte Maß eingestellt und somit die Längenausdehnung der Präsentationsebene an den aufzunehmenden Aufsteller angepasst werden. Gleichzeitig kann der erfindungsgemäße Aufsteller zum Transport in kompakte Einzelteile zerlegt werden.

Gemäß einer weiteren vorteilhaften Ausführungsform kann das Sockelgehäuse wenigstens einen Aufnahmeraum zur Unterbringung der Stütze bzw. deren Segmente und/oder wenigstens eine Halterung zur Befestigung der Stütze aufweisen. Auf diese Weise kann die Stütze im demontierten Zustand zum Transport im Sockelgehäuse untergebracht und/oder an dem Sockelgehäuse befestigt werden. Besonders vorteilhaft ist es, die wenigstens eine Halterung in dem wenigstens einen Aufnahmeraum anzuordnen, so dass die Stütze bzw. deren Segmente in der Aufnahme des Sockelgehäuses an der Halterung befestigt werden können.

Um die Handhabung des Aufstellers und insbesondere das Aufspannen der Präsentationsebene zu erleichtern, kann, in einer weiteren Ausführungsform, wenigstens eine Führung vorgesehen sein, durch welche die Präsentationsbahn zumindest beim Ausziehen aus dem Sockelgehäuse geführt ist. Vorzugsweise ist die Präsentationsbahn beim Herausziehen entlang der Präsentationsebene geführt und weiterhin vorzugsweise ist die Präsentationsbahn durch die Führung auch beim Einrollen der Präsentationsebene in das Sockelgehäuse geführt. Somit kann der in der Hülle aufgenommene Informationsträger mit eingerollt werden, ohne die Gefahr des Verknickens.

Vorzugsweise umfasst die Führung die Stütze und ein an der Präsentationsbahn angeordnetes Führungselement. Gemäß dieser Ausführungsform übernimmt die Stütze eine Doppelfunktion, nämlich erstens das Aufspannen der Präsentationsebene und zweitens das Führen der Präsentationsbahn bei eben diesem Aufspannen.

Besonders vorteilhaft ist es, das Führungselement am ausziehbaren Ende der Präsentationsbahn anzuordnen. Auf diese Weise ist die Präsentationsbahn stets an zwei Stellen geführt, einmal am ausziehseitigem Ende über das Führungselement und weiterhin an der Wickelwelle bzw. dem Sockelgehäuse. Vorzugsweise kann das Führungselement an der Auszugsstrebe angeordnet sein, beispielsweise kann die Auszugsstrebe eine Führungshülse aufweisen, die im montierten Zustand des Aufstellers nach Art einer Gardinenstangenaufhängung über eine pfostenartige Stütze gefädelt ist. Bei dieser Führung ist die Auszugsstrebe ausschließlich entlang des Stützpfostens verschieblich. Sofern sich die Stütze im Wesentlichen in Auszugsrichtung erstreckt, kann auf besonders einfache Weise die Präsentationsbahn linear in und entgegen der Auszugsrichtung verschiebbar gelagert sein.

Um zu verhindern, dass die Präsentationsbahn beim Aufspannen der Präsentationsebene zu weit abgerollt wird, kann gemäß einer weiteren Ausführungsform ein das Herausziehen der Präsentationsbahn aus dem Sockelgehäuse begrenzender Anschlag vorgesehen sein. Der Anschlag kann beispielsweise eine im Bereich der Wickelwelle angebrachte Bremse oder Raste sein, die bei einer vorbestimmten Abrolllänge der Präsentationsbahn ein weiteres Abrollen unterbindet. Ein Herausziehen der bereits vollständig von der Wickelwelle abgewickelten Präsentationsbahn, was die Befestigung der Präsentationsbahn an der Wickelwelle lösen könnte, wird auf diese Weise unterbunden.

Besonders vorteilhaft ist es, wenn die Führung den Anschlag aufweist, da somit durch die Führung das Herausziehen der Präsentationsbahn vom Sockelgehäuse geleitet wird und die Führung gleichzeitig durch ihren Anschlag das maximal mögliche Herausziehen festlegt. Die Ausgestaltung, dass die Führung den Anschlag aufweist, hat ferner den Vorteil, dass auf diese Weise sämtliche Komponenten des vollständig montierten Aufstellers so miteinander gekoppelt sind, dass lediglich das Aufspannen der Präsentationsebene durch Herausziehen der Auszugsstrebe in Auszugsrichtung und das Arretieren der Auszugsstrebe in aufgespanntem Zustand bzw. das Lösen der arretierten Strebe und die umgekehrte Verschiebung beim Einrollen der Präsentationsbahn möglich ist. Ein derartiger Aufsteller ist einstückig handhabbar und somit besonders anwenderfreundlich.

Gemäß einer weiteren vorteilhaften Ausführungsform kann die Präsentationsbahn ein Haltemittel aufweisen, das mit einem Gegenhalter in Eingriff bringbar ausgestaltet und durch das bei Eingriff mit dem Gegenhalter die Präsentationsbahn gegen Aufrollen gesichert ist. Auf diese Weise wird ein unbeabsichtigtes Einrollen der Präsentationsbahn durch die vom Haltemittel und Gegenhalter gebildete Halterung unterbunden.

Besonders vorteilhaft ist es, das Führungselement als Haltemittel auszubilden, wodurch dem Führungselement der Präsentationsbahn eine Doppelfunktion zukommt, nämlich das Herausziehen der Präsentationsbahn aus dem Sockelgehäuse zu führen und gleichzeitig an einer gewünschten Stelle die aufgespannte Präsentationsebene zu fixieren. Ein besonders einfacher Aufbau mit wenigen Bauteilen lässt sich dadurch erreichen, dass die Stütze den Gegenhalter aufweist. In dieser Ausführungsform bildet das Führungselement mit dem Gegenhalter der Stütze die Halterung, die den Aufsteller im aufgespannten Zustand fixiert. Beispielsweise kann das Führungselement als eine Führungsschelle ausgestaltet sein, deren Innendurchmesser über eine Stellschraube veränderbar ist. Alternativ kann das Führungselement im arretierten und aufgespannten Zustand an einem Halteabsatz der Stütze aufliegen und somit formschlüssig mit der Stütze verbunden sein. Hierfür kann die Stütze, wie bei einem Regenschirm, einen Rasthaken als Gegenhalter aufweisen, hinter dem das Führungselement in Auszugsrichtung zum Liegen kommt, oder das Führungselement wird, in Auszugsrichtung betrachtet, hinter einem Anschlag der Stütze eingehakt.

Schließlich kann der Anschlag in vorteilhafter Weise den Gegenhalter ausbilden, wodurch die Fixierung der Präsentationsebene erleichtert wird, da in einer fließenden Bewegung die Präsentationsbahn bis zum Anschlag herausgezogen werden kann und unmittelbar über den Anschlag als Gegenhalter fixierbar ist. Hier übt der Anschlag zwei Funktionen aus, ersten begrenzt er das Herausziehen der Präsentationsbahn über ein gewünschtes Maß und zweites fungiert er als Gegenhalter für das Haltemittel der Präsentationsbahn.

Nachfolgend wird die Erfindung anhand einer Ausführungsform beispielhaft erläutert. Wie oben ausgeführt ist, können die bei der beschriebenen Ausführungsform gemeinsam realisierten Merkmale beliebig miteinander kombiniert oder auch weggelassen werden, wenn die mit dem jeweiligen Merkmal verbundene Funktion für den vorliegenden Einsatzzweck unerheblich ist.

Es zeigen:
- Fig. 1A und Fig. 1B: eine schematische Aufsicht der Vorderansicht bzw. der Rückansicht des erfindungsgemäßen Aufstellers im eingerollten Zustand;
- Fig. 2A und Fig. 2B: eine Vorderansicht bzw. Rückansicht des erfindungsgemäßen Aufstellers mit montierter Stütze während des Aufspannens der Präsentationsbahn;
- Fig. 3A und Fig. 3B: die Vorderansicht bzw. Rückansicht des Aufstellers der Fig. 2A bzw. 2B im aufgespannten Zustand;
- Fig. 4A - C: Seitenansichten des erfindungsgemäßen Aufstellers, die das Überführen vom eingerollten in den aufgespannten und arretierten Zustand darstellen,
- Fig. 5: eine schematische Aufsicht vom Boden eines erfindungsgemäßen Sockelgehäuses in einer weiteren Ausführungsform;
- Fig. 6: eine Schnittdarstellung des Sockelgehäuses der Fig. 5 entlang der Schnittlinie A-A; und
- Fig. 7A und Fig. 7B: eine Seitenansicht bzw. Aufsicht der Halterung einer in dem Sockelgehäuse der Fig. 5 und 6 verwendeten Halterung.

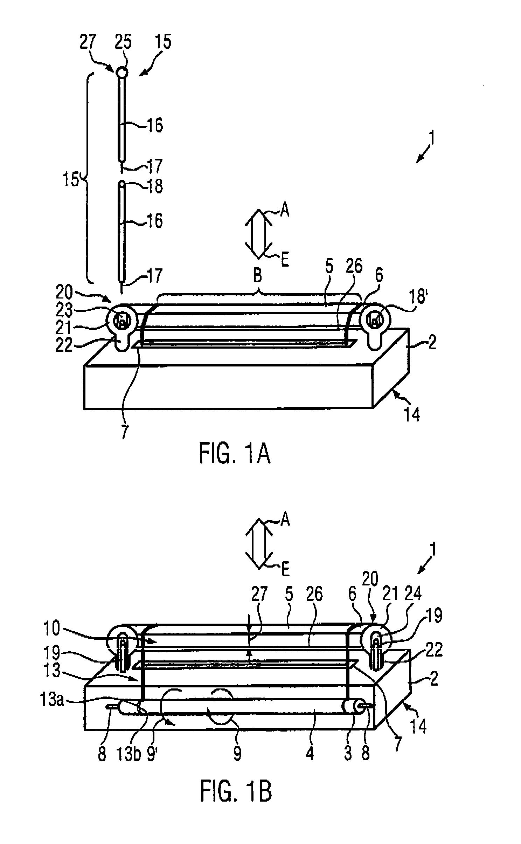

In den Figuren ist eine Ausführungsform des erfindungsgemäßen Aufstellers 1 gezeigt, wobei in Fig. 1A und 1B schematisch und perspektivisch die Vorder- bzw. Rückansicht des Aufstellers im demontierten und eingerollten Zustand dargestellt ist. Der Aufsteller 1 umfasst ein Sockelgehäuse 2, in dem eine Wickelwelle 3 drehbar gelagert ist. Das Sockelgehäuse 2 weist eine Standfläche 14 auf, mit der es sicher auf einem ebenen Untergrund platziert werden kann. Eine Präsentationsbahn 4 ist in Einrollrichtung 9 bzw. Abrollrichtung 9' auf- und abrollbar an der Wickelwelle 3 angeordnet. Beim Ausziehen in Auszugsrichtung A wird die Präsentationsbahn 4 in Abrollrichtung 9' von der Wickelwelle 3 abgewickelt.

Das befestigungsseitige Ende der Präsentationsbahn 4 ist an der Wickelwelle 3 befestigt und das dem befestigungsseitigen Ende gegenüberliegende, ausziehseitige bzw. ausziehbare Ende 5 der Präsentationsbahn 4 weist eine Auszugsstrebe 6 auf. Die Auszugsstrebe 6 ist außerhalb des Sockelgehäuses 2 und im Wesentlichen parallel zur Wickelwelle 3 angeordnet. Durch eine längliche, sich parallel zur Längsachse der Wickelwelle 3 erstreckende Öffnung 7 im Sockelgehäuse 2 ragt die Präsentationsbahn 4 im eingerollten Zustand aus dem Sockelgehäuse 2 mit ihrem ausziehbaren Ende 5 heraus.

Die Auszugsstrebe 6 ist länger als die Breite B der Präsentationsbahn 4, so dass die Präsentationsbahn 4 an ihrem ausziehbaren Ende 5 über ihre gesamte Breite B gehalten ist. Ferner ist die Abmessung der Auszugsstrebe 6 zumindest hinsichtlich ihrer Länge und/oder ihres Durchmessers größer als die entsprechende Ausdehnung der Öffnung 7 im Sockelgehäuse 2. Dadurch wird sichergestellt, dass beim Aufsteller 1 im eingerollten Zustand, der in den Figuren 1A und 1B gezeigt ist, die Auszugsstrebe 6 außerhalb des Sockelgehäuses 2 zum Liegen kommt und die Auszugsstrebe 6 nebst daran befestigtem ausziehbaren Ende 5 der Präsentationsbahn 4 nicht durch die Öffnung 7 in das Sockelgehäuse 2 eingezogen werden kann.

Die Wickelwelle 3 ist unter Vorspannung drehbar im Sockelgehäuse 2 gelagert. Hierzu ist eine Rückholfeder 8 vorgesehen, die beim Herausziehen in Auszugsrichtung A und dem Abrollen der Präsentationsbahn 4 in Abrollrichtung 9' gespannt wird. Somit übt die Rückholfeder 8 eine Rückstellkraft in Einrollrichtung 9 auf die Wickelwelle 3 aus. Eine federvorgespannte Wickelwelle 3 hat den Vorteil, dass die in Einrollrichtung 9 auf die Welle ausgeübte Rückstellkraft auf den aus dem Sockelgehäuse 2 herausgezogenen Abschnitt der Präsentationsbahn 4, der die Präsentationsebene 10 ausbildet, übertragen wird und die vom Sockelgehäuse 2 abstehende Präsentationsebene 10 unter Spannung hält.

Die Länge L der Präsentationsebene 10 entspricht dem Bereich der Präsentationsbahn 4, der sich in Auszugsrichtung A von der Öffnung 7 des Sockelgehäuses 2 bis zur Auszugsstrebe 6 erstreckt. Die Breite der Präsentationsebene 10 wird von der Breite B der Präsentationsbahn 4 festgelegt.

Die Präsentationsbahn 4 weist in der Präsentationsebene 10 wenigstens eine zumindest einseitig transparente Hülle 11 zur Aufnahme und Präsentation blattförmiger Informationsträger 12 auf.

In der gezeigten Ausführungsform wird die Hülle 11 von zwei aufeinander liegenden Folienschichten 13a, 13b ausgebildet, die als Präsentationsbahn 4 übereinander auf der Wickelwelle 3 aufgerollt sind. Die Folienschichten 13a, 13b stellen Bahnabschnitte einer umgelenkten Folienbahn 13 dar, die doppellagig auf der Wickelwelle 3 aufgewickelt ist. Dabei ist das erste Ende der Folienbahn 13 an der Wickelwelle 3 befestigt und erstreckt sich, die erste Folienschicht 13a bildend, von der Wickelwelle 3 bis zur Auszugsstrebe 6. Die Folienbahn 13 ist um die Auszugsstrebe 6 herumgelegt und wird nach der Umlenkung als zweite Folienschicht 13b zur Wickelwelle 3 zurückgeführt. Das zweite Ende der Folie 13 ist ebenfalls an der Wickelwelle 3 befestigt. Auf diese Weise ist die Folienbahn 13 doppellagig mit den beiden Folienschichten 13a und 13b auf der Wickelwelle 3 aufgerollt und gleichzeitig durch die Umlenkung um die Auszugsstrebe 6 an dieser mit ihrem ausziehseitigen Ende 5 frei gelagert angeordnet. Somit umläuft die Folienbahn 13 die Auszugsstrebe 6, ohne an dieser Strebe 6 befestigt zu sein. Die freie Lagerung verhindert eine Faltenbildung beim Aufrollen der Präsentationsbahn 4, die bei einer starren Befestigung der Folie 13 an der Auszugsstrebe 6 dadurch entsteht, dass die einzelnen Lagen 13a, 13b einer doppellagig aufgerollten Folienbahn 13 bzw. zweier aufeinander liegend angeordneten Folienschichten 13a, 13b unterschiedliche Ab- bzw. Aufrolllängen aufweisen. Während die freie Lagerung diese Längenunterschiede kompensiert, schlägt die Folienschicht 13a, 13b mit der kürzeren Aufrolllänge bei starrer Lagerung Falten, es sei denn, die Auszugsstrebe 6 selbst wäre um ihre Längsachse drehbar gelagert.

Die Folie 13 ist bevorzugt aus einem transparenten Material, beispielsweise einer Polypropylenfolie, gefertigt, so dass sowohl die von der einen Folienschicht 13a gebildete Vorderseite als auch die von der anderen Folienschicht 13b gebildete Rückseite der Hülle 11 Informationsmaterial 12 präsentieren kann. Die Rückstellkraft der Rückholfeder 8 erzeugt die Spannkraft, welche die Folienschichten 13a und 13b im Bereich der Präsentationsebene 10 als Hülle 11 eng aufeinander liegend aufspannt, so dass der in diese Hülle 11 eingeschobene Informationsträger 12 gut sichtbar präsentiert wird.

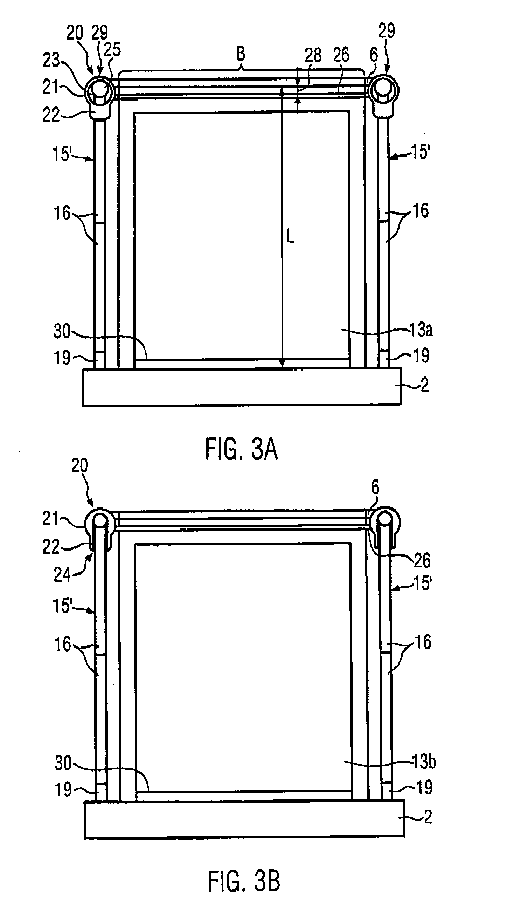

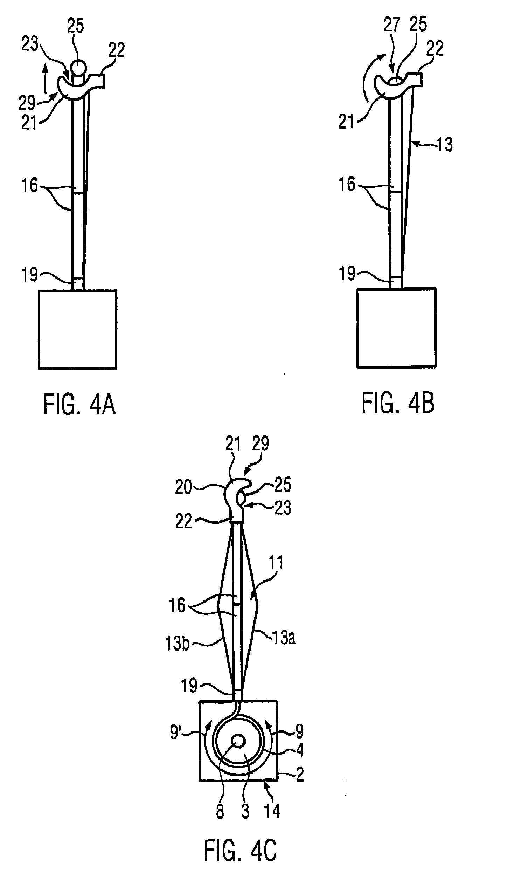

Im montierten und aufgespannten Zustand des erfindungsgemäßen Aufstellers 1, der in den Figuren 3A und 3B perspektivisch in Vorder- bzw. Rückansicht gezeigt ist, sind die beiden Folienschichten 13a und 13b parallel zueinander und eng aneinander liegend als Präsentationsebene 10 zwischen der Öffnung 7 des Sockelgehäuses 2 und der Befestigungsstrebe 6 aufgespannt. Wie in Figur 4C, die eine Seitenansicht des montierten und aufgespannten Aufstellers 1 zeigt, zu sehen ist, kann ein Informationsträger 12 vom Rand aus zwischen die beiden Folienschichten 13a und 13b, welche die Hülle 11 der Präsentationsebene 10 ausbilden, eingeschoben werden.

In der in den Fig. 3A und 3B gezeigten Ausführungsform weist die Präsentationsbahn 4 eine Schweißnaht 30 auf, welche die beiden Folienschichten 13a und 13b, die die Vorder- und Rückseite der Hülle 11 ausbilden, verbindet. Die Schweißnaht 30 verläuft im Wesentlichen senkrecht zur Auszugsrichtung A miteinander über die gesamte Breite der Präsentationsbahn und ist im sockelseitigen Bereich der Präsentationsebene 10 angeordnet. Die Ausführungsform der Fig. 3A und 3B hat den Vorteil, dass durch die Präsentationsbahn 4 mit Schweißnaht 30 ein Verrutschen des Informationsträgers 12 in den Abschnitt der Präsentationsbahn 4, der im aufgespannten Zustand im Sockelgehäuse 3 angeordnet ist, vermieden wird. Ferner kann durch geeignete Positionierung der Schweißbahn 30 die Größe der Hülle 11 individuell an den auszustellenden Informationsträger 12 angepasst werden. Auch können durch Ausbildung von zwei oder mehr parallel zueinander verlaufenden und in Auszugsrichtung A zueinander versetzt angeordneten Schweißnähten 30 mehrere Hüllen 11 in der Präsentationsebene 10 ausgebildet werden, so dass mehrere Informationsträger ausgestellt werden können. Durch eine Schweißnaht 30, die entlang der Auszugsrichtung A verläuft, können beispielsweise auch nebeneinander liegende Hüllen 11 in der Präsentationsbahn ausgebildet werden.

Da die Präsentationsebene 10 in der gezeigten Ausführungsform sockelseitig, also in der Öffnung 7 nicht fest gelagert ist, können die beiden Folienschichten 13a, 13b senkrecht zu ihren Schichtflächen auseinander gezogen werden, um den Spalt, durch den der von der Hülle 11 begrenzte Aufnahmeraum zugänglich ist, temporär zu vergrößern und das Einführen des Informationsmaterials 12 zu erleichtern.

Werden zum Einführen des Informationsträgers 12, wie in Figur 4C gezeigt ist, die die Hülle 11 bildenden Folienabschnitten 13a und 13b auseinandergezogen, um die Einführöffnung an den Rändern in die Hülle 11 zu vergrößern, sorgt die Rückstellkraft des Federelements 8 dafür, dass die Folienschichten 13a und 13b wieder in der Präsentationsebene 10 zurückbewegt werden, sobald die Folienschichten 13a und 13b wieder losgelassen werden. Die von der Wickelwelle 3 abgerollte Präsentationsbahn 4 wird in der Präsentationsebene 10 aufgespannt, die im Wesentlichen parallel zur Längsachse der Wickelwelle 3 und senkrecht zur Standfläche 14 des Sockelgehäuses 2 angeordnet ist.

In der gezeigten Ausführungsform ist parallel zur Auszugsstrebe 6 ein Querholm 26 angeordnet, der im aufgespannten und arretierten Zustand (Fig. 3A und 3B) des erfindungsgemäßen Aufstellers 1 in Auszugsrichtung A vor der Auszugsstrebe 6 angeordnet ist. Dabei verlaufen beide Folienschichten 13a, 13b entlang der gleichen Seite des Querholms 26, wodurch die beiden Folienschichten 13a, 13b durch den Querholm 26 umgelenkt und aufeinander liegend parallelisiert werden. Auf diese Weise sind die beiden Folienschichten 13a, 13b am ausziehbaren Ende 5 der Präsentationsbahn 4 nicht um die Außenbreite der Auszugsstrebe 6 voneinander beabstandet, sondern liegen als flache Hülle 11 übereinander.

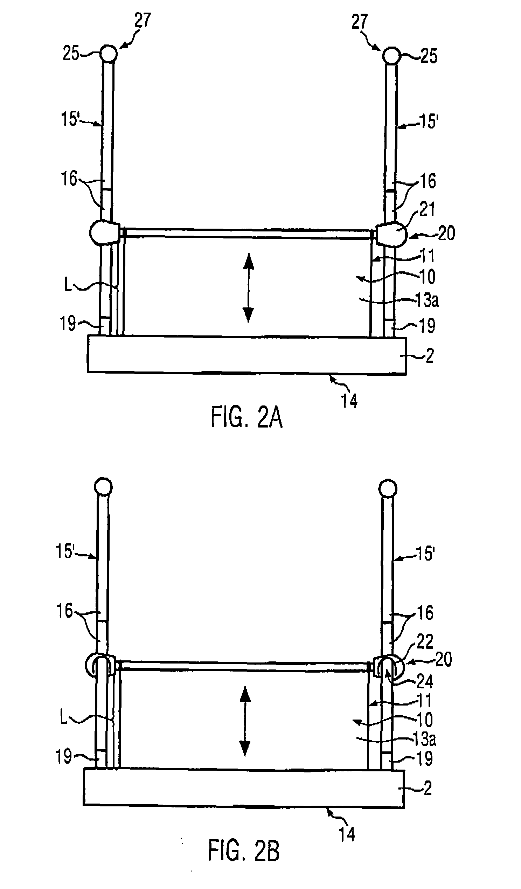

Um die Präsentationsebene 10 aufzuspannen, ist wenigstens eine Stütze 15 vorgesehen. Die Stütze 15 ist in der gezeigten Ausführungsform als Stützpfosten 15' ausgebildet, der am Sockelgehäuse 2 wiederholt angebracht werden kann und sich im montierten Zustand des Aufstellers 1, der in den Figuren 2A bis 4C gezeigt ist, im Wesentlichen entlang der Auszugsrichtung A erstreckt. Dabei ist die Stütze 15 im montierten Zustand zwischen Sockelgehäuse 2 und Auszugsstrebe 6 angeordnet und hält die Auszugsstrebe 6 vom Sockelgehäuse 2 beabstandet.

Der Stützpfosten 15' umfasst in der gezeigten Ausführungsform in Längsrichtung miteinander verbindbare Stützsegmente 16. Über die Anzahl und Länge der verwendeten Segmente 16 kann somit die Gesamtlänge der Stütze 15 variiert werden, wobei die Gesamtlänge der Stütze 15, vorausgesetzt diese Länge ist kürzer als die Gesamtlänge der aufgerollten Präsentationsbahn 4, die maximal mögliche Längsausdehnung L der Präsentationsbahn 10 in Auszugsrichtung A vorgibt.

In der dargestellten Ausführungsform sind die Stützsegmente 16 über eine Nut-Zapfen-Steckverbindung 16, 17 in Längsrichtung miteinander verbindbar. Die Steckverbindung umfasst einen sich an einem stirnseitigen Ende eines Segmentes 16 in Längsrichtung fortsetzenden Zapfen 17. Dieser Zapfen 17 ist passgenau in eine entsprechende Aufnahmenut 18, die nach Art einer Sacklochbohrung in die Stirnseite eines weiteren Segments 16 gefertigt ist, einsetzbar.

Zur Montage und Befestigung der Stütze 15 mit dem Sockelgehäuse 2 sind zwei Befestigungselemente 19 an dem Sockelgehäuse 2 angeordnet. Die Befestigungselemente 19 sind als kurze Pfostensegmente ausgebildet, die sich im Wesentlichen in Auszugsrichtung A erstrecken. Die Befestigungselemente 19 weisen an ihren in Auszugsrichtung A weisenden Ende ebenfalls eine Aufnahmenut 18' auf, die mit dem Zapfen 17 eines Pfostensegmentes 16 eine Steckverbindung ausbilden.

Anstelle der in der Ausführungsform gezeigten Zapfen-Nut-Steckverbindung kann selbstverständlich jede beliebige kraft- und/oder stoffschlüssige Verbindung, beispielsweise eine Schraubverbindung, zum Verbinden der einzelnen Segmente 16 zur Stütze 15 und zum Befestigen der Stütze 15 mit dem Befestigungselement 19 des Sockelgehäuses 2 vorgesehen sein.

In der in den Figuren gezeigten Ausführungsform umfasst der Aufsteller 1 als Stütze 15 zwei Stützpfosten 15', die sich im montierten Zustand im Wesentlichen in Auszugsrichtung A erstrecken. Die Befestigungselemente 19 des Sockelgehäuses 2 sind, fluchtend mit der Längsachse der Öffnung 7, an sich gegenüberliegenden Seiten der Öffnung 7 angeordnet. Somit verlaufen die beiden Stützpfosten 15' neben den Seitenrändern der Präsentationsebene 10. Diese Ausführungsform mit zwei Stützpfosten 15' hat den Vorteil, dass die Vorder- und Rückseite des Informationsträgers 12 präsentiert werden kann, ohne dass die Stütze 15 eine Seite verdeckt.

An jedem Ende der Auszugsstrebe 6 ist jeweils ein Führungselement 20 angeordnet. Das Führungselement 20 übernimmt im Wesentlichen drei Funktionen. Erstens verhindert es, dass das ausziehbare Ende 5 der Präsentationsbahn 4, das zur Befestigung lose um die Auszugsstrebe 6 herum geführt ist, nicht seitlich, d.h. quer zur Auszugsrichtung A bzw. entlang der Längsachse der Auszugsstrebe 6, von der Auszugsstrebe 6 abgezogen werden kann. Zweitens führt das Führungselement 20 die Präsentationsbahn 4 entlang der Auszugsrichtung A beim Aufspannen der Präsentationsebene 10. Drittens bildet bzw. weist das Führungselement 20 gleichzeitig ein Haltemittel 21 auf, welches im aufgespannten Zustand des Aufstellers 1 mit einem Gegenhalter 27 im Eingriff ist, so dass die Präsentationsbahn 4 gegen Aufrollen gesichert ist.

Das Führungselement 20 ist in den Figuren 1A und 1B aus einer Vorder- bzw. Rückansicht und in den Figuren 2A und 2B von unten bzw. von oben gezeigt. Eine Seitenansicht des Führungselementes 20 ist den Figuren 4A bis 4C zu entnehmen.

Jeweils ein Ende der Auszugsstrebe 6 und des Querholms 26 sind an jeweils einem Führungselement 20 so angebracht, dass Auszugsstrebe 6 und Querholms 26 im Wesentlichen parallel zueinander und um einen Spalt 28 voneinander beabstandet verlaufen. Auf diese Weise bilden die Auszugsstrebe 6, der Querholm 26 und die beiden Führungselemente 20 einen geschlossenen Rahmen. Diese Ausführungsform hat den Vorteil, dass das um die Auszugsstrebe 6 lose herum gelegte ausziehbare Ende 5 der Präsentationsbahn 4 unverlierbar mit der Auszugsstrebe 6 verbunden ist. Die beiden Führungselemente 20, zusammen mit dem Querholm 26 verhindern ein seitliches Abziehen der Folie 13 von der Auszugsstrebe 6.

Das Führungselement 20 umfasst eine Führungshülse 21 und eine Stützschale 22. An der Vorderseite (Figur 1A) weist die Führungshülse 21 eine Holsenöffnung 23 auf, die vollständig von der Führungshülse 21 eingefasst ist. Im montierten, aber noch nicht aufgespannten Zustand des erfindungsgemäßen Aufstellers 1, der in den Figuren 2A und 2B bzw. Figur 4A gezeigt ist, verläuft der Stützpfosten 15' durch die Führungshülse 21, die den Stützpfosten 15' vollständig umschließt. Auf diese Weise ist das Führungselement 20 im montierten Zustand unverlierbar mit der Stütze 15 verbunden und bildet mit der Stütze 15 die Führung 15, 20 aus, durch welche die Auszugsrichtung A der Präsentationsbahn 4 vorgegeben ist.

Die Stützschale 22 ist ein im Wesentlichen schalenförmiger Abschnitt des Führungselementes 20, der im Wesentlichen senkrecht zur Hülsenöffnung 23 angeordnet ist und dessen eines Ende in den Mantel der Führungshülse 21 übergeht.

An der Rückseite des Führungselementes 20 (Figur 1B) weist die Stützschale 20 einen Aufnahmeschlitz 24 auf. Die Breite des Aufnahmeschlitzes 24 ist so bemessen, dass sie kleiner als die Breite der Stützhülse 22 und eines am ausziehseitigen Ende des Stützpfostens 15' angeordneten Anschlags 25, aber größer als der Außendurchmesser des Stützpfostens 15' ist.

Die Form der Stützschale 22 entspricht somit einem kurzen Rohr, das entlang seiner Längsachse im Bereich durchgängig von einem Spalt, dem Aufnahmeschlitz 24, unterbrochen ist. Der Aufnahmeschlitz 24 erstreckt sich an der Rückseite des Führungselementes 20 entlang der kompletten Stützschale 22 und setzte sich weiter bis in den Bereich der Führungshülse 21 fort. Somit unterbricht der Aufnahmeschlitz 24 abschnittsweise auch den Mantel der Führungshülse 21 mit einer Einkerbung. Die Einkerbung erstreckt sich über etwa zwei Drittel bis drei Viertel des Mantels der Führungshülse 21 und entspricht in ihrer Form im Wesentlichen der Querschnittsform der Stützschale 22.

Insgesamt betrachtet, sieht das Führungselement 20 wie eine rohrförmige Halbschale aus, die an ihrem einen Rohrende als Führungshülse 21 ausgebildet ist. Dazu ist die Schale diesem Rohrende erstens aufgeweitet, zweitens in Längsrichtung verschlossen, und weist drittens senkrecht zur Längsrichtung eine Öffnung in dem Bereich der Schale auf, der dem Aufnahmeschlitz 24 gegenüberliegt.

Die Führungshülse 21 weist keinen konstanten Ringdurchmesser auf. Die Hülsenöffnung 23 an der Vorderseite der Führungshülse 21 ist größer als der Anschlag 25, der am ausziehseitigen Ende des Stützpfostens 15' quer zu dessen Längsachse heraussteht. In Auszugsrichtung A betrachtet weist der Anschlag 25 eine im Wesentlichen scheibenförmige um den Stützpfosten 15 herum gebildete Struktur auf, deren Durchmesser kleiner als die Hülsenöffnung 23, aber größer als die Breite des Aufnahmeschlitzes 24 ist.

Auf diese Weise gewährleistet das Führungselement 20, dass beim Aufspannen der Präsentationsbahn 4 das Führungselement 20 in Auszugsrichtung A nicht vom Stützpfosten 15 abgezogen werden kann. Zwar kann die Hülsenöffnung 23 über den Anschlag 25 hinaus bewegt werden. Jedoch stößt das Führungselement 20 mit seinem den rückseitigen Aufnahmeschlitz 24 einfassenden Bereich gegen den Anschlag 25, wodurch der Auszug der Präsentationsbahn 4, im Speziellen der Auszug deren ausziehbaren Endes 5 mit der Auszugsstrebe 6, begrenzt ist.

Im Folgenden wird die Befestigung der Auszugsstrebe 6 durch Verbinden der Führungselemente 20 mit dem Stützpfosten 15' unter Bezug auf die Figuren 4A bis 4C näher erläutert.

Nachdem der Aufsteller 1 ordnungsgemäß montiert wurde, so dass die beiden Stützpfosten 15' mit den Befestigungselementen 19 des Sockelgehäuses 2 verbunden sind, wobei jeder Stützpfosten 15' durch die Führungshülse 21 des ihm zugewiesenen Führungselementes 20 montiert wurden. Dabei weist die Hülsenöffnung 23 nach oben zum ausziehseitigen Ende des Stützpfostens 15' und der Aufnahmeschlitz 24 zeigt nach unten zum Sockelgehäuse 2.

An der Auszugsstrebe 6 gehalten, kann nun die Präsentationsbahn 4 abgerollt und zur Präsentationsebene 10, die aus dem Sockelgehäuse 2 herausragt, in Ausziehrichtung A herausgezogen und aufgespannt werden. Der Übergang vom montierten, aber eingerollten Zustand zum aufgespannten und arretierten Zustand ist in den Figuren 2A bis 4C gezeigt.

Dazu wird die Auszugsstrebe 6 soweit in Auszugsrichtung A bewegt, bis die Hülsenöffnung 23 in Auszugsrichtung A über den Anschlag 25 des Stützpfostens 15' bewegt ist und die schlitzförmige Rückseite der Führungshülse 22 in Auszugsrichtung A gegen den Anschlag 25 anstößt (Figur 4A, 4B).

Der Auszug der Auszugsstrebe 6 und das damit verbundene Aufspannen der Präsentationsebene 10 wird mittels der Führungshülse 21 und des Stützpfostens 15', an dem sie wie ein Gardinenring auf einer Stange geleitet wird, geführt.

Um den erfindungsgemäßen Aufsteller 1 im aufgespannten Zustand zu arretieren, wird das Führungselement 20 am Stützpfosten 15' festgelegt. Hierzu wird die Auszugsstrebe 6 entlang ihrer Längsachse um etwa 90° so um den Anschlag 25 gedreht, dass die Führungshülse 21 am Anschlag 25 so aufgehängt ist, dass sie in Auszugsrichtung A abschnittsweise hinter dem Anschlag 25 angeordnet wird. Die Drehung der Auszugsstrebe 6 wird durch den Querholm 26 erleichtert, welcher einen Kipphebel darstellt, dessen Verkippen in eine Rotation der Auszugsstrebe 6 übertragen wird, da Querholm 26 und Strebe 6 in der dargestellten Ausführungsform als einstückiger Rahmen ausgebildet sind.

Bei der Drehung zur Arretierung des aufgespannten Aufstellers 1 gleitet ein Teil des auszugsseitigen, vom Sockegehäuse 2 entfernten Endes der Stützpfosten 15' durch den Aufnahmeschlitz 24 in die Stützschale 22 hinein, wobei der Anschlag 25 in der Führungshülse 21 angeordnet wird, wie in den Figuren 3A, 3B und 4C zu erkennen ist.

Auf diese Weise führt das Führungselement 20 den Auszug der Auszugsstrebe 6 entlang der Auszugsrichtung A und bildet eine lösbare Befestigung, mit welcher die Führungshülse 20 am Anschlag 25 des Stützpfostens 15' fixiert ist und mit der erfindungsgemäße Aufsteller 1 im aufgespannten Zustand arretiert wird.

In der dargestellten Ausführungsform ist das Haltemittel 29 so ausgebildet, dass es den Gegenhalter 27, in der gezeigten Ausführungsform der Anschlag 25, nicht nur in Auszugsrichtung A hintergreift, sondern auch quer zur Auszugsrichtung, zumindest abschnittsweise umfasst. In der gezeigten Ausführungsform ist dies beispielsweise dadurch gewährleistet, dass der Aufnahmeschlitz von der Stützschale 22 abgewandte Bereich der Führungshülse 21, der im aufgespannten Zustand den Anschlag 25 hintergreift, als eine Pfanne ausgebildet ist, die den Anschlag 25 aufnimmt.

Die Arretierung durch eine Drehbewegung der Auszugsstrebe 6 ist insofern vorteilhaft, als das Aufspannen und Arretieren des Aufstellers in einer fließenden Bewegung und mit einer Hand durchgeführt werden kann.

Die Arretierung ist jedoch nicht auf die in den Figuren gezeigte Ausführungsform beschränkt. Denkbar wäre es auch, als Führungselemente 20 einfache Führungshülse 21 zu verwenden, deren Innendurchmesser durch eine Stellschraube verkleinert, die somit kraftschlüssig mit der Stützstrebe an einer beliebigen Stelle fixiert werden können. Auch denkbar wäre eine Ausgestaltung, bei der eine Stellschraube durch den Führungshülse 21 radial durch die Ringwand in das Innere des Rings geschraubt und gegen die Stütze 15 gepresst wird. Eine andere Alternative wäre, den Stützpfosten 15' mit wenigstens einer quer aus der Pfostenwand herausragenden Federraste nach Art eines Regenschirms zu versehen.

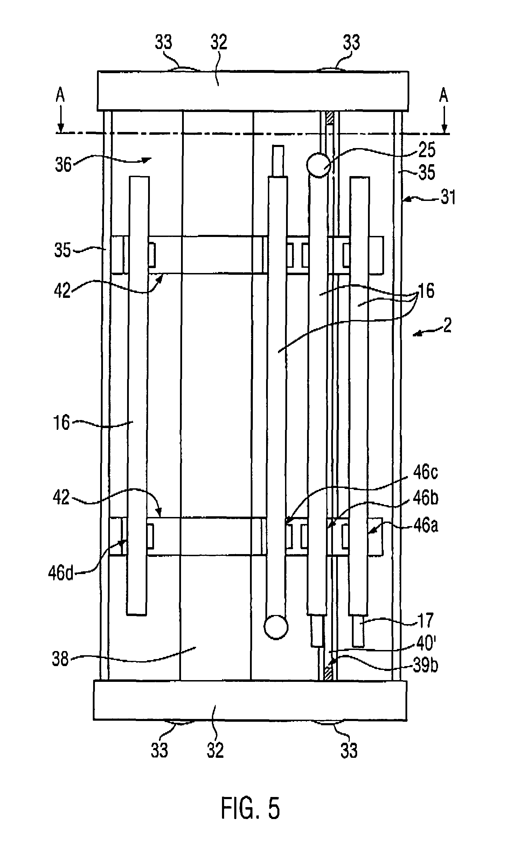

In den Fig. 5 bis 7B ist eine weitere Ausführungsform eines erfindungsgemäßen Sockelgehäuses 2 gezeigt. Für Teile, deren Aufbau und/oder ähnlich oder identisch von Teilen der vorherigen Ausführungsformen ist, werden im Folgenden dieselben Bezugszeichen wie in den vorangegangenen Figuren verwendet.

Das Sockelgehäuse 3 umfasst einen Gehäusekörper 31 sowie zwei Gehäusekappen 32. Der Gehäusekörper 31 ist vorteilhafter Weise als ein Extrusionsprofil ausgebildet, so dass über die Länge des Extrusionsprofils, welche die Länge des Sockelgehäuses und somit die Breite des Aufstellers 1 vorgibt, der erfindungsgemäße Aufsteller 1 auf einfache Weise an unterschiedliche Formate von aufzustellenden Informationsträgern 12 angepasst werden kann.

An beiden Enden ist der Gehäusekörper 31 von einer Gehäusekappe 32, die Ober das jeweilige Ende des Gehäusekörpers 31 gestülpt ist, abgeschlossen. Die Gehäusekappen 32 sind mittels Schrauben 33 mit dem Gehäusekörper 31 verbunden.

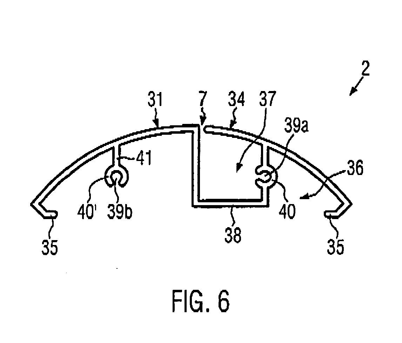

In der gezeigten Ausführungsform weist der Gehäusekörper 31 im Querschnitt, der in Fig. 6 zu erkennen ist, einen gebogenen Verlauf auf, so dass die Oberseite 34 des Gehäusekörpers 31 die Form einer geschwungenen Platte aufweist, welche entlang ihrer Mittelachse abschnittsweise durch die Schlitzöffnung 7 unterbrochen ist. An den Seitenrändern ist der Gehäusekörper 31 jeweils nach innen umgeschlagen, wodurch sich ein im Querschnitt hakenförmiger Seitenrand ergibt, wobei die jeweiligen Hakenenden an den Seitenrändern im Wesentlichen aufeinander zu gerichtet sind. Durch die zwei Umschläge werden Schienen 35 an der Unterseite des Gehäusekörpers 31 ausgebildet.

Durch die geschwungene Form des Gehäusekörpers 31 weist dieser, wenn der Gehäusekörper 31 auf den Schienen 35 an der Unterseite des Gehäusekörpers 31, welche durch den Umschlag entstehen, abgestellt wird, einen Aufnahmeraum 36 auf. In dem Aufnahmeraum 36 ist eine Wellenkammer 37 ausgeformt, in welcher die Wickelwelle 3 (nicht gezeigt) angeordnet und drehbar gelagert werden kann und welche die schlitzförmige Öffnung 7 aufweist.

Die Kammerwand 38, welche die Wellenkammer 37 umgrenzt, weist an einer Stelle eine Schraubenöffnung 39a auf, in welche eine der Schrauben 33 eingeschraubt werden kann, um die entsprechende Gehäusekappe 32 mit dem Gehäusekörper 31 zu verbinden. Die Schrauböffnung 39a wird von einen im Wesentlichen C-förmigen Profil, das an einer Stelle in die Kammerwand 38 integriert ist, gebildet.

Ferner weist der Gehäusekörper 31 eine weitere Schrauböffnung 39b auf, die ebenfalls von einem C-förmigen Profil 40' gebildet ist, das Ober einen sich aus der Unterseite des gewölbten Gehäusekörpers 31 erhebenden Abstandssteg 41 im Aufnahmeraum 36 angeordnet ist und als Gegengewinde für die zweite Befestigungsschraube 33 dient.

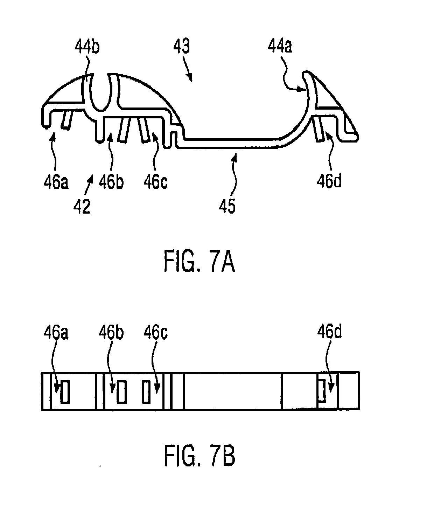

In dem Aufnahmeraum 36 des erfindungsgemäßen Sockelgehäuses 2, das in den Fig. 5 bis 6 gezeigt ist, können die einzelnen Segmente 16 des Stützpfosten 15' untergebracht werden, wenn der erfindungsgemäße Aufsteller 1 zum Transport im demontierten Zustand vorliegt. Hierzu sind Halterungen 42, die im Detail in den Fig. 7A und 7B gezeigt sind, zur Befestigung der Stützsegmente 16 am Sockelgehäuse 3 vorgesehen.

Die Halterungen 42, von denen in der in Fig. 5 gezeigten Ausführungsform zwei Stück im Aufnahmeraum 36 des Gehäusekörpers 31 angeordnet sind, sind als Spritzgussteile ausgebildet, können jedoch auch als klammerförmige Extrusionselemente gefertigt werden. An der Oberseite 43 der Halterungen 42 sind diese mit zwei Klammerelementen 44a und 44b versehen. Das erste Klammerelement 44a ist in seiner Form an die Außenkontur der Wellenkammer 37 angepasst und die Form der zweiten Klammer 44b entspricht im Wesentlichen dem C-Profil 40, das am Abstandssteg 41 angeordnet ist. Über die Klammern 44a und 44b kann die Halterung 42 somit im Aufnahmeraum 36 sowohl an der Kammerwand 37 als auch am C-Profil 40' an einer beliebigen Stelle und wiederholt lösbar befestigt werden.

Die Unterseite 45 der Halterung, die in Fig. 7B als Aufsicht zu sehen ist, weist mehrere Clips 46 auf, die zur Befestigung der Segmente 16 dienen. In der gezeigten Ausführungsform mit vier Stützsegmenten 16 ist die Halterung mit vier Clips 46a, 46b, 46c und 46d versehen, so dass jedes der vier Stützsegmente 16 in die entsprechenden Clips 46a bis 46d der Halterungen 42 eingeclipst werden kann.

In den Fig. 5 bis 7B gezeigte Ausführungsform des erfindungsgemäßen Sockelgehäuses kann selbstverständlich auch lediglich eine Halterung oder mehr als zwei Halterungen aufweisen, je nach Breite des erfindungsgemäßen Aufstellers 1, d.h. je nach Länge des entsprechenden Gehäusekörpers 31. Selbstverständlich können die Clips 46 der Halterung 42 auch direkt in den Gehäusekörper 31 ausgebildet werden, wodurch auf separate Halterungen 42 verzichtet werden könnte.

Schließlich könnte die Präsentationsbahn 4 auch als opake Projektionsfläche, beispielsweise für einen Diaprojektor oder Laserbeamer, ausgebildet werden, die optional an einer Seite mit einer Hülle versehen sein kann.

## Patentansprüche

1. Aufsteller (1) mit einer in einem Sockelgehäuse (2) drehbar gelagerten Wickelwelle (3), einer an der Wickelwelle (3) auf- und abrollbar angeordneten Präsentationsbahn (4), wobei die zumindest teilweise von der Wickelwelle (3) abgerollte und aufgespannte Präsentationsbahn (4) eine vom Sockelgehäuse (2) abstehende Präsentationsebene (10) ausbildet, **dadurch gekennzeichnet, dass** die Präsentationsebene (10) wenigstens eine zumindest einseitig transparente Hülle (11) zur Aufnahme und Präsentation blattförmiger Informationsträger (12) aufweist.

2. Aufsteller gemäß Anspruch 1, **dadurch gekennzeichnet, dass** das ausziehbare Ende (5) der Präsentationsbahn (4) eine im Wesentlichen parallel zur Wickelwelle (3) angeordnete Auszugsstrebe (6) aufweist.

3. Aufsteller gemäß Anspruch 1 oder 2, **dadurch gekennzeichnet, dass** die Präsentationsebene (10), vorzugsweise die Präsentationsbahn (4), im Wesentlichen aus der Hülle (11) besteht.

4. Aufsteller gemäß einem der Ansprüche 1 bis 3, **dadurch gekennzeichnet, dass** die Hülle (11) von wenigstens zwei aufeinander liegenden Folienschichten (13a, 13b) gebildet wird.

5. Aufsteller gemäß Anspruch 4, **dadurch gekennzeichnet, dass** die Folienschichten (13a, 13b) von einer umgelenkten Folienbahn (13) gebildet sind.

6. Aufsteller gemäß einem der Ansprüche 1 bis 5, **dadurch gekennzeichnet, dass** wenigstens eine Stütze (15) vorgesehen ist, welche die Präsentationsebene (10) aufspannt.

7. Aufsteller gemäß Anspruch 6, **dadurch gekennzeichnet, dass** die Stütze (15) eine veränderbare Länge aufweist.

8. Aufsteller gemäß einem der Ansprüche 1 bis 7, **dadurch gekennzeichnet, dass** wenigstens eine Führung (15, 20) vorgesehen ist, durch welche die Präsentationsbahn (4) beim Herausziehen aus dem Sockelgehäuse (2) geführt ist.

9. Aufsteller gemäß Anspruch 8, **dadurch gekennzeichnet, dass** die Führung (15, 20) die Stütze (15) und ein an der Präsentationsbahn (4) angeordnetes Führungselement (20) umfasst.

10. Aufsteller gemäß einem der Ansprüche 1 bis 9, **dadurch gekennzeichnet, dass** ein das Herausziehen der Präsentationsbahn (4) aus dem Sockelgehäuse (2) begrenzender Anschlag (25) vorgesehen ist.

11. Aufsteller gemäß Anspruch 10, **dadurch gekennzeichnet, dass** die Führung (15, 20) den Anschlag (25) aufweist.

12. Aufsteller gemäß einem der Ansprüche 1 bis 11, **dadurch gekennzeichnet, dass** die Präsentationsbahn (4) ein Haltemittel (29) aufweist, das mit einem Gegenhalter (27) in Eingriff bringbar ausgestaltet und durch das bei Eingriff mit dem Gegenhalter (27) die Präsentationsbahn (4) gegen Aufrollen gesichert ist.

13. Aufsteller gemäß Anspruch 12, **dadurch gekennzeichnet, dass** das Führungselement (21) als Haltemittel (29) ausgebildet ist.

14. Aufsteller gemäß Anspruch 12 oder 13, **dadurch gekennzeichnet, dass** die Stütze (15) den Gegenhalter (27) aufweist.

15. Aufsteller gemäß einem der Ansprüche 6 bis 14, **dadurch gekennzeichnet, dass** das Sockelgehäuse (12) wenigstens einen Aufnahmeraum (36) zur Unterbringung der Stütze (15) und/oder wenigstens eine Halterung (42) zur Befestigung der Stütze (15) aufweist.
